# EUROPEAN PATENT SPECIFICATION

(11) **EP 3 487 315 B1**
(45) Date of publication and mention of the grant of the patent: **15.02.2023**
(21) Application number: 17831854.9
(22) Date of filing: 20.07.2017
(51) Int. Cl.: A23L 3/00, A23L 3/04, F04D 25/08, F04D 29/58, A23L 3/18

(54) **BULK FOOD PROCESSOR WITH ANGLED FAN**
GROSSKÜCHENMASCHINE MIT ABGEWINKELTEM LÜFTER
APPAREIL DE TRANSFORMATION DE PRODUITS ALIMENTAIRES EN VRAC À VENTILATEUR INCLINÉ

(30) Priority: 21.07.2016 US 201662365086 P
(43) Date of publication of application: 29.05.2019
(73) Proprietor: Laitram, L.L.C., Harahan, LA 70123 (US)
(72) Inventor: GREVE, Christopher G., Covington Louisiana 70433 (US); LAPEYRE, Robert S., New Orleans Louisiana 70115 (US); KOVACS, Joseph F., New Orleans Louisiana 70125 (US)
(74) Representative: Forresters IP LLP
(86) International application number: PCT/US2017/043013
(87) International publication number: WO 2018/017800

(56) References cited:
- EP-A2- 0 728 995
- WO-A1-2015/133981
- CN-A- 101 390 647
- CN-A- 103 622 130
- JP-A- H0 530 952
- JP-A- 2002 253 113
- JP-A- 2014 117 164
- US-A- 6 146 678
- US-B1- 7 285 299
- US-B1- 7 820 216
- US-B2- 8 707 861

## Description

### BACKGROUND

The invention relates generally to a processor for food articles and more particularly to apparatus and methods for pasteurizing food.

In preparing foods or other items in bulk, the items may be conveyed through a processing chamber using a conveyor belt. A process, such as heating, cooling or steaming the articles may be performed. For example, it may be desirable to pasteurize nuts, such as almonds, in bulk using a conveyor belt. Pasteurization may involve heating and -or cooling the nuts using heated or cooled air circulated over the conveyed nuts. It may be desirable to enhance the flow of air in certain processing chambers to make the processing of articles more efficient

Bulk processors for the thermal treatment of food items are disclosed in e.g., JP H05 30952 A and EP 0 728 995 A2.

### SUMMARY

The present invention relates to a bulk processor for an item, which is defined by the claims. Said bulk processor for an item comprises:
a processing chamber having a product inlet and a product outlet; a conveyor for conveying product through the processing chamber; and an axial flow fan for circulating air around the product; wherein the axial flow fan is mounted on a door to the processing chamber and wherein the axial flow fan extends obliquely into the processing chamber, wherein the axial flow fan is driven by a fan motor extending obliquely through the door and into the air duct formed in the processing chamber, and wherein
the axial flow fan has a shroud that extends to and interfaces with a lower duct at an angle, so that the bottom of the axial flow fan is closer to the door than the top of the axial flow fan.

The bulk food processor employs an angled axial air flow fan to circulate air over a product conveyed through a processing chamber. Product is conveyed through the processing chamber by a conveyor belt, which has a returnway that passes back through the processing chamber.

The bulk processor for an item comprises a processing chamber having a product inlet and a product outlet, a conveyor for conveying product through the processing chamber and an axial flow fan for circulating air around the product.

According to an aspect, a bulk processor for an item comprises a processing chamber having an inlet and an outlet, a conveyor belt for conveying product through the processing chamber, the conveyor belt having an carryway and returnway passing through the chamber and an air circulator for circulating air along an air flow path that passes through the carryway and the returnway.

### BRIEF DESCRIPTION OF THE DRAWINGS

These features and aspects of the invention, as well as its advantages, are described in more detail in the following description, appended claims, and accompanying drawings, in which:
FIG. 1 is an isometric view of a bulk food processor according to an embodiment of the invention;
FIG. 2 is another view of the bulk food processor of FIG. 1;
FIG 3 is a cut-away isometric view of the bulk food processor of FIG. 1;
FIG. 4 is a cut-away front view of the bulk food processor of FIG. 1, showing the interior of a processing chamber;
FIG. 5 is a cut-away isometric view of the bulk food processor of FIG. 1;
FIG. 6 is a cut-away front view of an axial flow fan used in the bulk food processor of FIG. 1;
FIG. 7 is an isometric interior view of the axial flow fan of FIG. 6; and
FIG. 8 is a cut-away front view of the interface between the two processing chambers of the bulk food processor of FIG. 1.

### DETAILED DESCRIPTION

The present invention, which is defined by the claims, relates to a bulk processor for an item which comprises : a processing chamber (30, 40) having a product inlet and a product outlet; a conveyor (20) for conveying product through the processing chamber (30, 40); and an axial flow fan (50) for circulating air around the product; wherein the axial flow fan (50) is mounted on a door to the processing chamber (30, 40) and wherein the axial flow fan (50) extends obliquely into the processing chamber (30, 40), wherein the axial flow fan (50) is driven by a fan motor (51) extending obliquely through the door (80) and into the air duct formed in the processing chamber (30), and wherein the axial flow fan (50) has a shroud (56) that extends to and interfaces with a lower duct (54) at an angle, so that the bottom of the axial flow fan (50) is closer to the door (80) than the top of the axial flow fan (50).

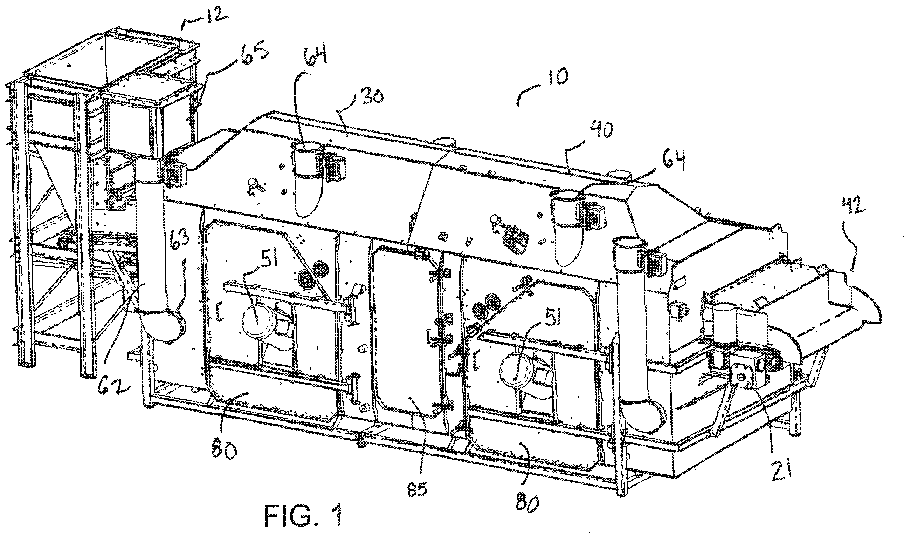

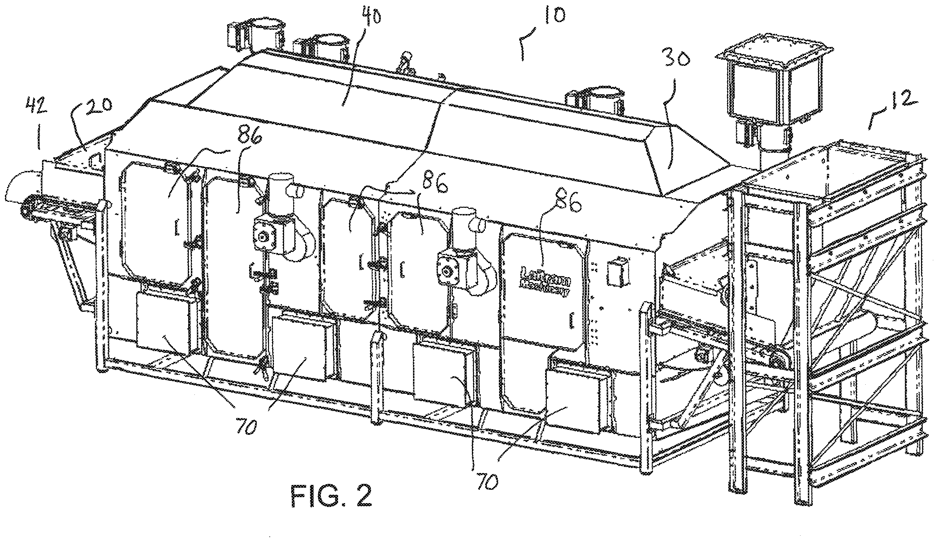

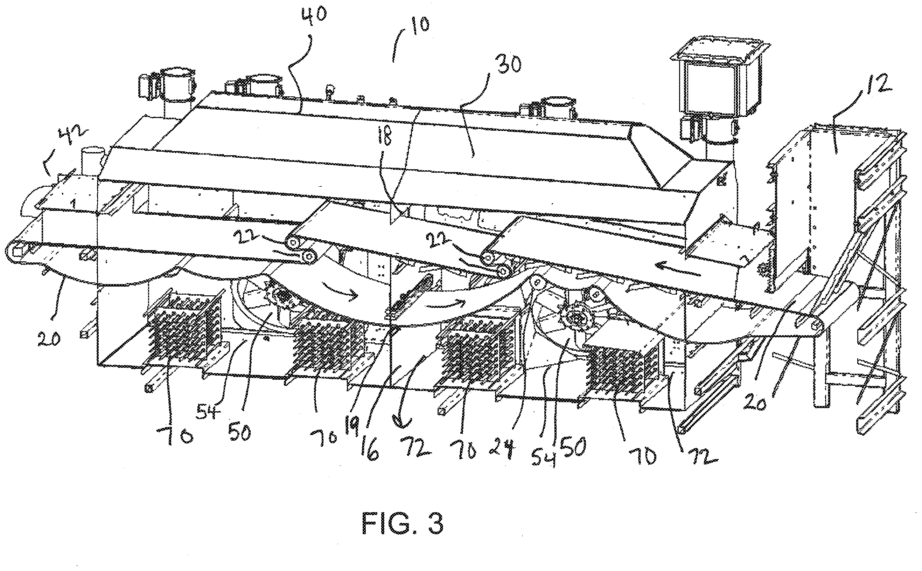

A processor 10 that operates according to and embodies features of the invention is shown in FIGS. 1 and 2. FIG. 3 is a cut-away side view of the processor 10. The processor 10 changes the temperature of an item conveyed through the processor. For example, the processor can be used to raise the temperature of nuts being pasteurized, pasteurize nuts using steam, dry pasteurized nuts, cool pasteurized nuts or perform any suitable process on any suitable article, not limited to nuts.

The illustrative processor 10 has an entrance for items to be processed, shown as a hopper 12. A conveyor belt 20 receives items from the hopper near the infeed of the conveyor belt and conveys the items along a processing path, where a process, such as heating, cooling or steam pasteurizing, is performed on the items. In one embodiment, the belt is a foraminous belt with sufficient opening to allow airflow therethrough. The conveyor belt 20 is trained around drive and idle sprockets (not shown) at opposite ends of an upper carryway that traverses the processor, and driven by a motor 21 or other suitable drive. Diverting rollers or drums 24 or other guides guide the endless conveyor belt 20 along a returnway within the processor below the carryway. The conveyor belt includes repositioning flips formed by repositioning rollers 22 along the upper carryway, as described in US Patent Numbers 8,028,618 and 5,410,951.

The illustrative processing path comprises serial processing chambers 30, 40 in communication with each other. Processed items exit the processor 10 at exit 42.

Each processing chamber 30, 40 includes an air circulator, shown as an axial flow fan 50 for circulating air along an air flow path that intersects items being conveyed atop the conveyor belt 20 along the carryway. The conveyor belt is foraminous to allow the air to pass through. Other features of such a processor as described thus far are given in U.S. Patent No. 6,274,188, "Method for Steam-Cooking Shrimp at Reduced Temperatures to Decrease Yield Loss," August 14, 2001, and PCT Published Application Number WO 2015/133981, entitled "Low-Temperature, Forced-Convection, Steam-Heating of Nuts". One example of such a cooker is the CoolSteam^{®} cooker manufactured and sold by Laitram Machinery, Inc., of Harahan, Louisiana, U.S.A.

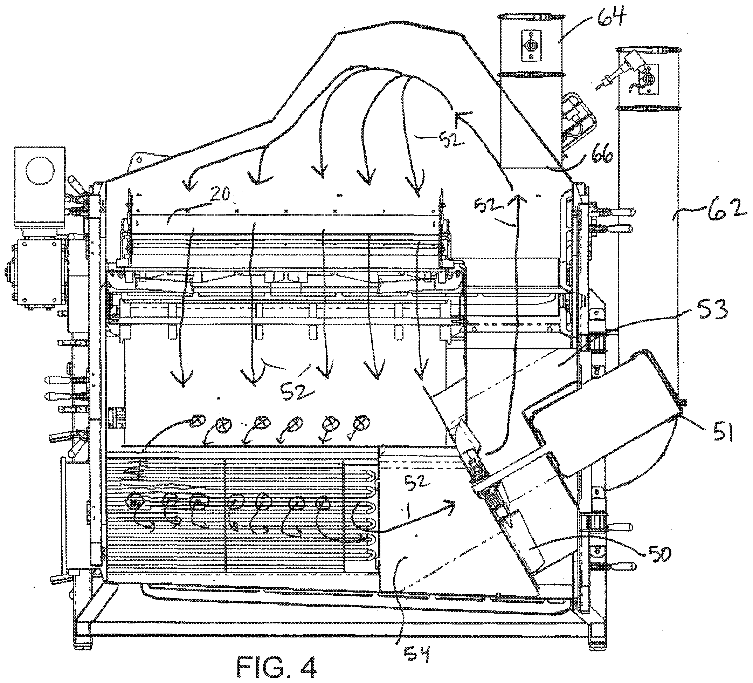

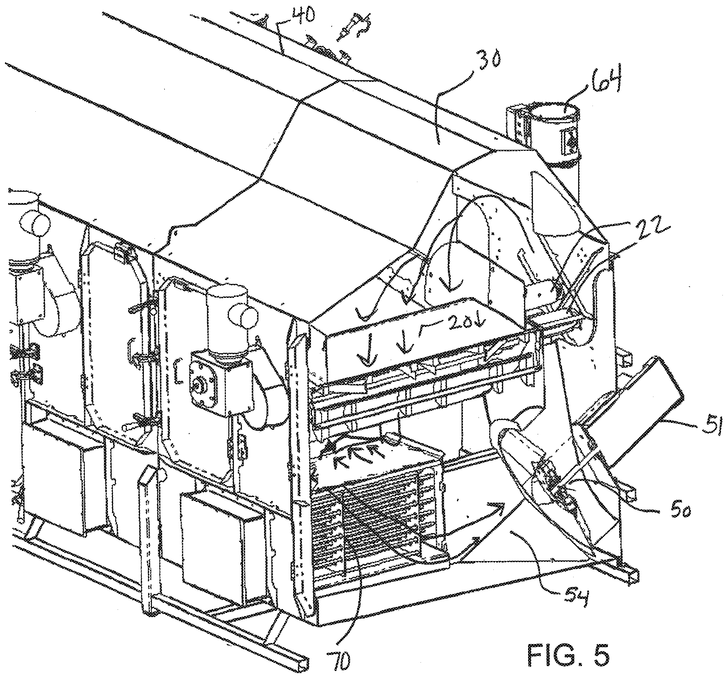

FIGS. 4 and 5 and are cut-away views of the first processing chamber 30, illustrating the air flow path, represented by arrows 52 in FIG. 4. The axial air flow fan 50, driven by a motor 51, pulls air from a lower duct 54 below the conveyor belt 20, and pushes air up into a fan flow chamber 53 on the side of the processing chamber 30. The illustrative fan flow chamber 53 extends vertically up the side of the processing chamber 30. The top of the processing chamber 30 is shaped to direct the airflow over the product on the conveyor belt 20. The region above the conveyor belt forms a high pressure region, while the region below the conveyor belt forms a lower pressure region. Air is pushed through the foraminous conveyor belt into the low pressure region below the conveyor belt. The processing chamber 30 also includes an air inlet 62 for pulling in ambient air and an air outlet 64 for releasing air to the ambient, if necessary. Processing chamber 40 is similar to processing chamber 30.

The air circulated by the axial flow fan 50 may be heated, cooled, or at ambient temperature. In the illustrative embodiment, each processing chamber 30, 40 includes two sets of heating or cooling coils 70 below the conveyor belt on each side of the lower duct 54. Air pushed through the conveyor belt is deflected off the sealed top of the lower duct 54, over the covered tops of the coils 70 into a region 72 (shown in FIG. 3) between the front or rear of each processing chamber and the coils 70, opposite the lower duct 54. The air is them pulled through the coils 70 to either heat or cool or otherwise process the air before it passes into the lower duct 54 and the axial flow fan 50 pulls the heated, cooled or otherwise processed air into the fan flow chamber 53 and over the conveyed product in the processing chamber 30 to either heat, cool or otherwise process the conveyed product.

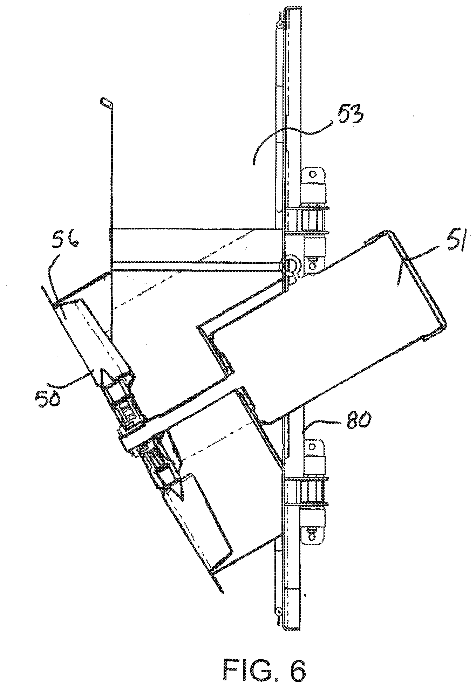

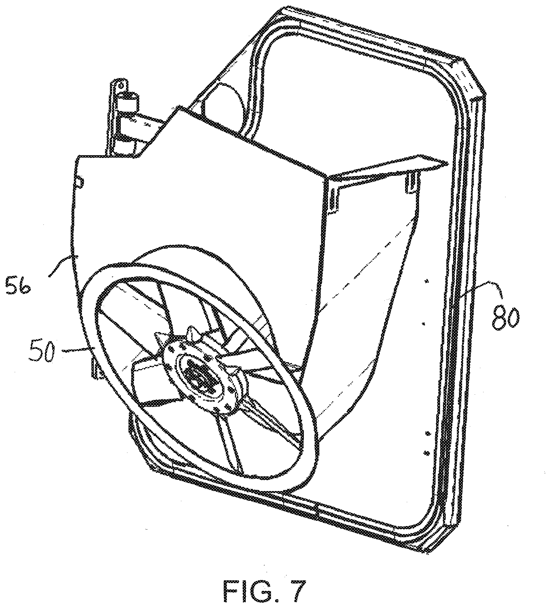

The illustrative axial flow fan 50, shown in detail in FIGS. 6 and 7, may be mounted in a door 80 of each processing chamber to facilitate access to the axial flow fan. The illustrative axial flow fan is mounted obliquely, with the fan motor 51 extending obliquely through the door 80 and into the air duct formed in the respective processing chamber. The axial flow fan 50 and motor 51 may be mounted at any suitable angle to facilitate airflow through the fan flow chamber 53 extending parallel to the door 80 in which the axial flow fan 50 and motor 51 are mounted. In one embodiment, the axial flow fan 50 and motor 51 are tilted inward at an angle between about 15° and about 45° and preferably about 30°, though the invention is not so limited. The axial flow fan 50 has a shroud 56 that extends to and interfaces with the lower duct 54 at an angle, so that the bottom of the fan is closer to the door 80 than the top of the fan.

Referring back to FIG. 1, as mentioned, each processing chamber 30, 40 includes an ambient air inlet 62 for pulling in ambient air and an air outlet 64. The air inlet 62 comprises a duct open to the environment having an outlet 63 that is below the conveyor belt 20 and in communication with a chamber 72 adjacent the coils 70. The air inlet 62 may include a filter 65 at the input to filter the air before passing it into the lower chamber 72. The air outlet 64 comprises a duct 64 having an entrance 66 (see FIG. 4) at the top of the vertical fan flow chamber 53 for bleeding off air, if necessary. The duct 64 has a damper or other suitable regulator for regulating the release of air from the associated processing chamber 30 or 40. In one embodiment, the air inlet 62 and -or air outlet 64 includes one or more sensors, for example, a humidity sensor, a temperature sensor or other suitable sensor, for measuring one or more properties of the air. A controller can control the opening and shutting of the air ducts 62, 64 based on measurements from the sensors.

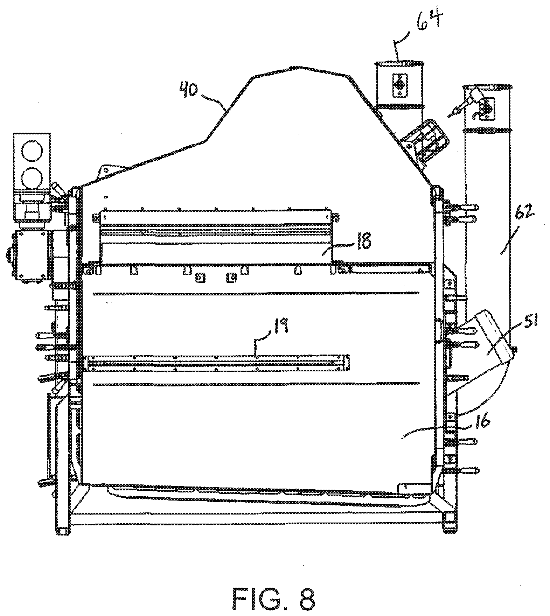

As described above, the processor 10 comprises two serial chamber 30, 40 that perform a process, such as heating, pasteurizing, cooling or drying, on a product conveyed through the chambers, though the processor may include any suitable number of chambers. As shown in FIGS. 3 and 8, the chambers 30, 40 are separated by a wall 16 or other interface that allows product to exit the first product chamber 30 and enter the second processing chamber 40. The illustrative wall 16 includes an upper opening 18 that allows the upper carryway of the conveyor belt 20 to pass from the first chamber 30 into the second chamber 40, along with any processed product conveyed by the conveyor belt. The upper opening 18 may have a seal, such as a rubber sheet, to limit airflow between the two chambers while allowing product to pass. The wall 16 includes a slot 19 below the upper opening 18 for allowing the conveyor belt 20 to pass from the second chamber 40 into the first chamber 30. Thus, the returnway of the conveyor belt is contained within the processing chambers 30, 40, which may promote hygiene and facilitate cleaning of the conveyor belt.

The processor may also include a central door 85, between the doors 80 shown in FIG. 1, for accessing an interior area of the processor at the interface between the two processing chambers 30, 40. One or more doors 86 may be provided on the other side of the processor for interior access, as shown in FIG. 2.

In one embodiment, a plurality of processors may be used together to pasteurize a product, such as almonds or other nuts. A first processor with an angled axial fan may receive raw almonds from an input, such as a hopper, and circulate warm air over the raw almonds as they are conveyed through the first processor, to pre-heat the almonds. The first processor passes the pre-heated almonds to a second processor having an angled axial fan, which uses steam and air combined and blown by the angled axial fan, to pasteurize the almonds as they are conveyed through the second processor. Then, the second processor can pass the pasteurized almonds to a third processor, which can used heated air circulated using an angled axial fan to dry the pasteurized nuts as they are conveyed through the third processor. Finally, a fourth processor, which can used cooled air circulated through a cooling chamber by an angled axial fan, cools the pasteurized, dried nuts as they pass through the cooling chamber.

## Claims

1. A bulk processor (10) for an item, comprising:
a processing chamber (30, 40) having a product inlet and a product outlet;
a conveyor (20) for conveying product through the processing chamber (30, 40); and
an axial flow fan (50) for circulating air around the product;
wherein the axial flow fan (50) is mounted in a door (80) to the processing chamber and wherein the axial flow fan (50) extends obliquely into the processing chamber (30, 40), wherein the axial flow fan (50) is driven by a fan motor (51) extending obliquely through the door (80) and into an air duct formed in the processing chamber (30), and wherein the axial flow fan (50) has a shroud (56) that extends to and interfaces with a lower duct (54) at an angle, so that the bottom of the axial flow fan (50) is closer to the door (80) than the top of the axial flow fan (50).

2. The bulk processor (10) of claim 1, wherein the axial flow fan (50) extends at an angle of about 30° relative to a side wall of the processing chamber (30, 40).

3. The bulk processor (10) of claim 1, wherein the conveyor is a conveyor belt (20) having an upper span for conveying product and a lower span below the upper span that passes through the processing chamber (30, 40).

4. The bulk processor (10) of claim 1, further comprising temperature coils (70) below the conveyor for changing the temperature of air circulated by the axial flow fan (50).

5. The bulk processor (10) of claim 1, further comprising an air inlet (62) for passing ambient air into the processing chamber (30, 40).

6. The bulk processor (10) of claim 1, further comprising an air outlet (64) for selectively releasing air from the processing chamber (30, 40).

7. The bulk processor (10) of claim 1, wherein the conveyor (20) is a conveyor belt and wherein the axial flow fan (50) pulls air from a lower duct (54) below the conveyor belt (20) and pushes air up into a fan flow chamber (53) on the side of the processing chamber (30, 40).

8. The bulk processor (10) of claim 7, wherein the fan flow chamber (53) extends vertically up the side of the processing chamber (30, 40).

9. The bulk processor (10) of claim 8, further comprising an ambient air inlet (62) for pulling in ambient air and an air outlet (64), wherein the air outlet (64) comprises a duct having an entrance (66) at the top of the vertical fan flow chamber (53) for bleeding off air.

10. The bulk processor (10) of claim 5, further comprising temperature coils (70) below the conveyor for changing the temperature of air circulated by the axial flow fan (50), wherein the conveyor (20) is a conveyor belt and wherein the air inlet (62) comprises a duct open to the environment having an outlet (63) that is below the conveyor belt (20) and in communication with a chamber (72) adjacent the coils.

## Patentansprüche

1. Großküchenmaschine (10) für einen Artikel, umfassend:
eine Verarbeitungskammer (30, 40) mit einem Produkteinlass und einem Produktauslass;
einen Förderer (20) zum Fördern von Produkten durch die Verarbeitungskammer (30, 40); und
einen Axialströmungslüfter (50) zum Umwälzen von Luft um das Produkt herum;
wobei der Axialströmungslüfter (50) in einer Tür (80) zu der Verarbeitungskammer montiert ist und wobei sich der Axialströmungslüfter (50) schräg in die Verarbeitungskammer (30, 40) erstreckt, wobei der Axialströmungslüfter (50) von einem Lüftermotor (51) angetrieben wird, der sich schräg durch die Tür (80) und in einen in der Verarbeitungskammer (30) gebildeten Luftkanal erstreckt, und wobei der Axialströmungslüfter (50) eine Ummantelung (56) aufweist, die sich unter einem Winkel zu einem unteren Kanal (54) erstreckt und mit diesem verbunden ist, so dass die Unterseite des Axialströmungslüfters (50) näher zu der Tür (80) ist als die Oberseite des Axialströmungslüfters (50).

2. Großküchenmaschine (10) nach Anspruch 1, wobei sich der Axialströmungslüfter (50) unter einem Winkel von etwa 30 ° relativ zu einer Seitenwand der Verarbeitungskammer (30, 40) erstreckt.

3. Großküchenmaschine (10) nach Anspruch 1, wobei der Förderer ein Förderband (20) mit einer oberen Spannweite zum Produktfördern und einer unteren Spannweite unterhalb der oberen Spannweite, die durch die Verarbeitungskammer (30, 40) verläuft, ist.

4. Großküchenmaschine (10) nach Anspruch 1, ferner umfassend Temperaturspulen (70) unterhalb des Förderers zum Ändern der Temperatur der von dem Axialventilator (50) umgewälzten Luft.

5. Großküchenmaschine (10) nach Anspruch 1, ferner umfassend einen Lufteinlass (62) zum Durchleiten von Umgebungsluft in die Verarbeitungskammer (30, 40).

6. Großküchenmaschine (10) nach Anspruch 1, ferner umfassend einen Luftauslass (64) zum selektiven Freisetzen von Luft aus der Verarbeitungskammer (30, 40).

7. Großküchenmaschine (10) nach Anspruch 1, wobei der Förderer (20) ein Förderband ist und wobei der Axialströmungslüfter (50) Luft aus einem unteren Kanal (54) unterhalb des Förderbands (20) saugt und Luft nach oben in eine Lüfterströmungskammer (53) auf der Seite der Verarbeitungskammer (30, 40) drückt.

8. Großküchenmaschine (10) nach Anspruch 7, wobei sich die Lüfterströmungskammer (53) die Seite der Verarbeitungskammer (30, 40) vertikal nach oben erstreckt.

9. Großküchenmaschine (10) nach Anspruch 8, ferner umfassend einen Umgebungslufteinlass (62) zum Ansaugen von Umgebungsluft und einen Luftauslass (64), wobei der Luftauslass (64) einen Kanal mit einem Eingang (66) an der Oberseite der vertikalen Lüfterströmungskammer (53) zum Ablassen von Luft umfasst.

10. Großküchenmaschine (10) nach Anspruch 5, ferner umfassend Temperaturspulen (70) unterhalb des Förderers zum Ändern der Temperatur der von dem Axialströmungslüfter (50) umgewälzten Luft, wobei der Förderer (20) ein Förderband ist und wobei der Lufteinlass (62) einen zur Umgebung offenen Kanal mit einem Auslass (63), der unterhalb des Förderbands (20) ist und mit einer Kammer (72) neben den Spulen in Verbindung steht, umfasst.

## Revendications

1. Appareil de transformation en vrac (10) pour un article, comprenant :
une chambre de traitement (30, 40) ayant une entrée de produit et une sortie de produit ;
un transporteur (20) servant à transporter un produit à travers la chambre de traitement (30, 40) ; et
un ventilateur à courant axial (50) servant à faire circuler de l'air autour du produit ;
le ventilateur à courant axial (50) étant monté dans une porte (80) de la chambre de traitement et le ventilateur à courant axial (50) s'étendant obliquement dans la chambre de traitement (30, 40), le ventilateur à courant axial (50) étant entraîné par un moteur de ventilateur (51) s'étendant obliquement à travers la porte (80) et dans un conduit d'air formé dans la chambre de traitement (30), et le ventilateur à courant axial (50) ayant un épaulement (56) qui s'étend jusqu'à un conduit inférieur (54) et qui s'interface avec lui selon un certain angle, de sorte que le bas du ventilateur à courant axial (50) soit plus proche de la porte (80) que le haut du ventilateur à courant axial (50).

2. Appareil de transformation en vrac (10) selon la revendication 1, dans lequel le ventilateur à courant axial (50) s'étend selon un angle d'environ 30° par rapport à une paroi latérale de la chambre de traitement (30, 40).

3. Appareil de transformation en vrac (10) selon la revendication 1, dans lequel le transporteur est une bande transporteuse (20) ayant une portée supérieure qui sert à transporter un produit et une portée inférieure, en dessous de la portée supérieure, qui traverse la chambre de traitement (30, 40).

4. Appareil de transformation en vrac (10) selon la revendication 1, comprenant en outre des serpentins de température (70) en dessous du transporteur pour faire varier la température de l'air mis en circulation par le ventilateur à courant axial (50).

5. Appareil de transformation en vrac (10) selon la revendication 1, comprenant en outre une entrée d'air (62) servant à faire passer l'air ambiant dans la chambre de traitement (30, 40).

6. Appareil de transformation en vrac (10) selon la revendication 1, comprenant en outre une sortie d'air (64) servant à libérer de manière sélective l'air de la chambre de traitement (30, 40).

7. Appareil de transformation en vrac (10) selon la revendication 1, dans lequel le transporteur (20) est une bande transporteuse et dans lequel le ventilateur à courant axial (50) aspire l'air d'un conduit inférieur (54) en dessous de la bande transporteuse (20) et pousse l'air vers le haut dans une chambre de courant de ventilateur (53) sur le côté de la chambre de traitement (30, 40).

8. Appareil de transformation en vrac (10) selon la revendication 7, dans lequel la chambre de courant de ventilateur (53) s'étend verticalement jusqu'au côté de la chambre de traitement (30, 40).

9. Appareil de transformation en vrac (10) selon la revendication 8, comprenant en outre une entrée d'air ambiant (62) servant à aspirer l'air ambiant et une sortie d'air (64), la sortie d'air (64) comprenant un conduit ayant une entrée (66) au sommet de la chambre de courant de ventilateur (53) verticale pour évacuer l'air.

10. Appareil de transformation en vrac (10) selon la revendication 5, comprenant en outre des serpentins de température (70) en dessous du transporteur pour faire varier la température de l'air mis en circulation par le ventilateur à courant axial (50), le transporteur (20) étant une bande transporteuse et l'entrée d'air (62) comprenant un conduit ouvert à l'environnement ayant une sortie (63) qui est en dessous de la bande transporteuse (20) et en communication avec une chambre (72) adjacente aux serpentins.
